# EUROPÄISCHE PATENTSCHRIFT

(11) **EP 1 554 547 B1**
(45) Veröffentlichungstag und Bekanntmachung des Hinweises auf die Patenterteilung: **27.02.2013**
(21) Anmeldenummer: 03795801.4
(22) Anmeldetag: 24.10.2003
(51) Int. Cl.: G01D 11/10

(54) **PROZESS-MESSGERÄT**
PROCESS MEASURING INSTRUMENT
APPAREIL DE MESURE DE PROCESSUS

(30) Priorität: 25.10.2002 DE 10250065
(43) Veröffentlichungstag der Anmeldung: 20.07.2005
(73) Patentinhaber: Endress + Hauser Flowtec AG, 4153 Reinach BL 1 (CH)
(72) Erfinder: DRAHM, Wolfgang, 85435 Erding (DE); RIEDER, Alfred, 84034 Landshut (DE); ZEISLMEIER, Helmut, 85356 Freising (DE); FRÖHLICH, Gabriele, 85399 Hallbergmoos (DE)
(74) Vertreter: Andres, Angelika Maria
(86) Internationale Anmeldenummer: PCT/EP2003/011838
(87) Internationale Veröffentlichungsnummer: WO 2004/038341

(56) Entgegenhaltungen:
- DE-A- 19 545 091
- DE-A- 19 548 467
- DE-C- 1 248 958
- GB-A- 1 219 066
- US-A- 4 594 584
- US-A- 5 131 279
- US-A1- 2002 026 822

## Beschreibung

Die Erfindung betrifft ein Prozeß-Meßgerät mit einem in eine Wandung eines ein Prozeß-Medium führenden Behälters einsetzbaren Meßaufnehmer und einem mit dem Meßaufnehmer mechanisch gekoppelten Elektronik-Gehäuse für eine Meßgerät-Elektronik.

In der industriellen Prozeß-Meßtechnik werden zur Erzeugung von analogen oder digitalen Prozeß-Meßgrößen repräsentierenden Meßsignalen, insb. auch im Zusammenhang mit der Automatisierung chemischer oder verfahrenstechnischer Prozesse, vor Ort Prozeß-Meßgeräte, sogenannte Feldmeßgeräte eingesetzt. Bei den zu erfassenden Prozeß-Meßgrößen kann es sich z.B. um einen Massendurchfluß, einen Füll- oder einen Grenzstand, einen Druck oder eine Temperatur, handeln. Derartige Feldmeßgeräte sind beispielsweise in der EP-A 984 248, US-A 38 78 725, US-A 43 08 754, US-A 44 68 971, US-A 45 74 328, US-A 45 94 584, US-A 46 17 607, US-A 47 16 770, US-A 48 50 213, US-A 50 52 230, US-A 51 31 279, US-A 53 63 341, US-A 57 96 011, US-B 62 36 322, US-B 63 97 683 oder der WO-A 00 36 379 beschrieben.

Zum Erfassen einer oder mehrerer Prozeß-Meßgrößen weist das Feldmeßgerät einen entsprechenden, zumeist physikalisch-elektrischen Meßaufnehmer auf, der in eine Wandung eines ein entsprechendes, z.B. flüssiges, pulver-, dampf- oder gasförmiges, Prozeß-Medium führenden Behälters, z.B. eine Rohrleitung oder einen Tank, eingesetzt ist und der dazu dient, wenigstens ein die erfaßte Prozeß-Meßgröße repräsentierendes, insb. elektrisches, Meßsignal zu erzeugen.

Darüber hinaus ist der Meßaufnehmer mit einer entsprechenden, insb. auch einer Weiterverarbeitung oder Auswertung des wenigstens einen Meßsignals dienenden, Meßgerät-Elektronik verbunden. Üblicherweise sind Feldgeräte der beschriebenen Art ferner über ein an die Meßgerät-Elektronik angeschlossenes Datenübertragungs-System miteinander und/oder mit entsprechenden Prozeß-Leitrechnern verbunden, wohin sie die Meßsignale z.B. via (4 mA bis 20 mA)-Stromschleife und/oder via digitalen Daten-Bus senden. Als Datenübertragungs-Systeme dienen hierbei, insb. serielle, Feldbus-Systeme, wie z.B. PROFIBUS-PA, FOUNDATION FIELDBUS sowie die entsprechenden Übertragungs-Protokolle. Mittels der Prozeß-Leitrechner können die übertragenen Meßsignale weiterverarbeitet und als entsprechende Meßergebnisse z.B. auf Monitoren visualisiert und/oder in Steuersignale für Prozeß-Stellglieder, wie z.B. Magnet-Ventile, Elektro-Motoren etc., umgewandelt werden.

Zur Aufnahme der Meßgerät-Elektronik umfassen Prozeß-Meßgeräte der beschriebenene Art ein Elektronik-Gehäuse, das, wie z.B. in der US-A 63 97 683 oder der WO-A 00 36 379 vorgeschlagen, vom Felmeßgerät entfernt angeordnet und mit diesem nur über eine flexible Leitung verbunden sein kann oder das, wie z.B. auch in der EP-A 903 651 oder der EP-A 1 008 836 gezeigt, direkt am Feldmeßgerät angeordnet ist. Oftmals dient dann das Elektronik-Gehäuse, wie beispielsweise in der EP-A 984 248, der US-A 45 94 584; der US-A 47 16 770 oder der US-A 63 52 000 gezeigt, auch dazu, einige mechanische Komponenten des Meßaufnehmers mit aufzunehmen, wie z.B. sich unter mechanischer Einwirkung betriebsmäßig verformende membran-, stab- oder hülsenförmige Deformation- oder Vibrationskörper.

Der Vorteil einer direkten, insb. auch starren, mechanischen Verbindung zwischen Elektronik-Gehäuse und Meßaufnehmer ist vor allem darin zu sehen, daß vor Ort nach dem Einbau des Meßaufnehmers praktisch kein weiteren Montageschritte für die Fixierung des Elektronik-Gehäuses erforderlich sind. Allerdings können allfällig im Meßaufnehmer erzeugte oder aber auch im Prozeß erzeugte und via Meßaufnehmer übertragenen Vibrationen, wie z.B. Vibrationen oder Druckstöße in einer angeschlossenen Rohrleitung, nahezu ungedämpft in das Elektronik-Gehäuse eingekoppelt werden. Dieses, insb. bei starren Verbindungen, praktisch nicht vermeidbare Einkoppeln von Vibrationen wiederum kann im Elektronik-Gehäuse zu Gehäuse-Vibrationen mit erheblichen Schwingungsamplituden führen.

Aus den Gehäuse-Vibrationen resultierende Beschleunigungskräfte bzw. Biegemomente stellen zunächst eine erhöhte mechanische Belastung des Feldmeßgeräts insgesamt und des das Elektronik-Gehäuse tragenden Meßaufnehmers im besonderen dar. So sind z.B. bei Untersuchungen solcher Gehäuse-Vibrationen Beschleunigungskräfte von über 10 G (G = Gewicht des untersuchten Elektronik-Gehäuses) bei Auslenkung von über 50 µm festgestellt worden.

Darüber hinaus ist aber auch, insb. bei Feldmeßgeräten mit im Elektronik-Gehäuse angeordneten mechanischen Komponenten des Meßaufnehmers, festgestellt worden, daß die Gehäuse-Vibrationen dem eigentlichen Nutzanteil des Meßsignals als Störanteil überlagert werden oder, anders gesagt, auf das Meßsignal übersprechen.

Für den Fall, daß die Gehäuse-Vibrationen dabei eine Resonanzfrequenz aufweisen, die etwa im Meßbereich des Meßaufnehmers oder gar im Bereich einer, z.B. betriebsgemäß veränderlichen, Signalfrequenz des Meßsignals liegen würde, kann eine Separierung des Nutzanteils im Meßsignal von allfälligen Störanteilen praktisch unmöglich werden. Jedenfalls ließe sich diese Separierung des Nutzanteils aufgrund dessen, daß das Meßsignal verarbeitende Meßelektroniken über einen vergleichsweise weiten Signalpegelbereich aussteurbar und dabei bei vergleichsweise hoher Signalbandbreite auch sehr trennscharf sein müssen. Dementsprechend würde sich der schaltungstechnische Aufwand für die Meßgerät-Elektronik deutlich erhöhen und somit auch erhebliche Mehrkosten bei der Herstellung des Feldmeßgeräts verursachen.

Eine Aufgabe der Erfindung besteht daher darin, das vorbeschriebene "Übersprechen" der Gehäuse-Vibrationen auf das Meßsignal zu vermeiden und somit die Störanteile im Meßsignal in ihren Amplituden oder auch Energien zu verringern.

Zur Lösung der Aufgabe besteht die Erfindung in einem Prozeß-Meßgerät, insb. Feldmeßgerät, das umfaßt:
- einen in eine Wandung eines ein Prozeß-Medium führenden Behälters, inbs. einer Rohrleitung oder einem Tank, einsetzbaren Meßaufnehmer sowie
- ein mit dem Meßaufnehmer mechanisch, insb. starr, gekoppelten Elektronik-Gehäuse für eine Meßgerät-Elektronik,
- wobei das Elektronik-Gehäuse im Meßaufnehmer erzeugten oder via Meßaufnehmer übertragenen Vibrationen zumindest zeitweise ausgesetzt ist, und
- wobei zum Verringern von Schwingungsamplituden allfälliger Vibrationen des Elektronik-Gehäuses an einer Wandung von diesem wenigstens ein Schwingungsdämpfer_fixiert ist, der zum Dissipieren von in das Elektronik-Gehäuse eingetragener Schwingungsenergie zumindest zeitweise schwingen gelassen wird.

Nach einer bevorzugten ersten Ausgestaltung der Erfindung ist der Schwingungsdämpfer von einer Verbindungstelle zwischen Meßaufnehmer und Elektronik-Gehäuse, insb. möglichst weit, entfernt angeordnet.

Nach einer bevorzugten zweiten Ausgestaltung der Erfindung weist der schwingengelassene Schwingungsdämpfer eine Güte auf, die im Vergleich zu einer Güte des vibrierenden Elektronik-Gehäuses niedriger ist.

Nach einer bevorzugten dritten Ausgestaltung der Erfindung weist der schwingengelassene Schwingungsdämpfer eine Güte auf, die im Bereich von 1 bis 5, insb. bei etwa 3, liegt.

Nach einer bevorzugten vierten Ausgestaltung der Erfindung weist der Schwingungsdämpfer eine Resonanzfrequenz auf, die höchstens um etwa 10% von einer Resonanzfrequenz des Elektronik-Gehäuses abweicht.

Nach einer bevorzugten fünften Ausgestaltung der Erfindung weist der Schwingungsdämpfer eine Resonanzfrequenz auf, die kleiner ist als eine Resonanzfrequenz des Elektronik-Gehäuses.

Nach einer-bevorzugten sechsten Ausgestaltung der Erfindung weist der Schwingungsdämpfer eine Masse auf, die größer als 1% einer Masse des Elektronik-Gehäuses ist.

Nach einer bevorzugten siebenten Ausgestaltung der Erfindung ist der Schwingungsdämpfer innerhalb des Elektronik-Gehäuses angeordnet.

Nach einer bevorzugten achten Ausgestaltung der Erfindung umfaßt der Schwingungsdämpfer einen scheiben- oder becherförmigen Kunststoff-Körper, in den ein, insb. scheiben- oder plattenförmiger Metall-Körper eingelassen oder eingebettet ist.

Nach einer bevorzugten neunten Ausgestaltung der Erfindung, umfaßt der Schwingungsdämpfer einen Kunststoff-Körper, der an der Wandung des Elektronik-Gehäuses fixiert, insb. angeklebt, ist.

Ein Grundgedanke der Erfindung ist es, zum einen die Schwingungsamplituden von Vibrationen des Elektronik-Gehäuses dadurch zu minimieren, daß die Schwingungsenergie zum einen aus dem Elektronik-Gehäuse aus- und in den Schwingungsdämpfer eingegekoppelt wird, und daß zum anderen diese Schwingungsenergie mittels des Schwingungsdämpfers dissipiert und somit praktisch aus dem Prozeß-Meßgerät wieder "entfernt" wird.

Durch die Unterdrückung der Gehäuse-Vibrationen können die Ströranteile möglicherveise zwar nicht vollständig aus dem Meßsignal ferngehalten werden, sie können aber zumindest insoweit reduziert werden, daß aufgrund der Verbesserung des Nutz-zu-Störanteil-Verhältnisses im Meßsignal nunmehr eine Separierung des Nutzanteils über eine Abschätzung der Signalamplituden der verschiedenen Signalanteile erfolgen kann. Für den bei Meßaufnehmern mit zumindest einer im Betrieb, z.B. aufgrund eines vom zu messenden Prozeß-Medium abhängigen oder mitbeeinflußten Amplitudenganges, veränderlichen mechanischen Resonanzfrequenz oftmals unvermeidlich Fall, daß eine Resonanzfrequenz der Gehäuse-Vibrationen etwa im Bereich einer betriebsgemäß veränderlichen Signalfrequenz des Meßsignals liegen würde, kann somit diese Separierung immerhin noch anhand von Vergleichen der Signalamplituden mit vorgegebenen Signal-Schwellenwerten erfolgen.

Ein Vorteil der Erfindung besteht dabei insb. darin, daß die Auswertung des Meßsignals mit vergleichsweise niedrigem schaltungstechnischen Aufwand, insb. auch mit herkömmlicherweise verwendeten Meßgerät-Elektroniken, erfolgen kann.

Ein weiterer Vorteil der Erfindung ist auch darin zu sehen, daß die Verwendung eines solchen an einer Wandung des Elektronik-Gehäuses fixierten Schwingungsdämpfers praktisch keinerlei Veränderungen im Bereich der Prozeßanschlüsse bzw. -schnittstellen, wie z.B. den ggf. im Elektronik-Gehäuse untergebrachten Komponenten des Meßaufnehmers, erforderlich macht. Darüber hinaus kann ein solcher, z.B. aus einem in einen Kunstoff-Körper eingebetteten Metall-Körper bestehender, Schwingungsdämpfer sehr einfach und damit auch sehr robust aufgebaut sein.

Die Erfindung und weitere Vorteile werden nun anhand von Ausführungsbeispielen näher erläutert, die in den Figuren der Zeichnung dargestellt sind. Gleiche Teile sind in unterschiedlichen Figuren mit denselben Bezugszeichen bezeichnet, die jedoch weggelassen sind, wenn es die Übersichtlichkeit erfordert.
- Fig. 1: zeigt ein Ausführungsbeispiel für ein Prozeß-Meßgerät mit einem Elektronik-Gehäuse in einer perspektivischen Ansicht,
- Fig. 2: zeigt das Prozeß-Meßgerät von Fig. 1 in einer geschnitten Seitenansicht und
- Fig. 3 bis 6: zeigen in Diagramme mit ermittelten Schwingungsamplituden von Gehäuse-Vibrationen eines Elektronik-Gehäuses gemäß Fig. 1 oder 2.

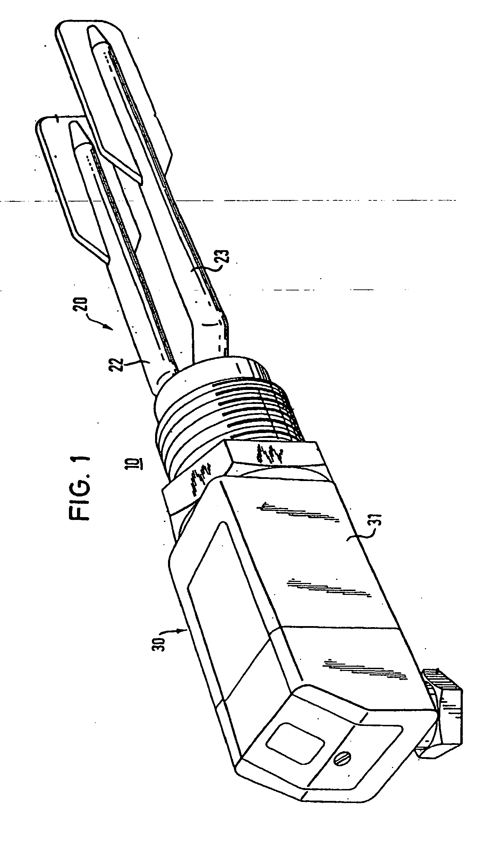

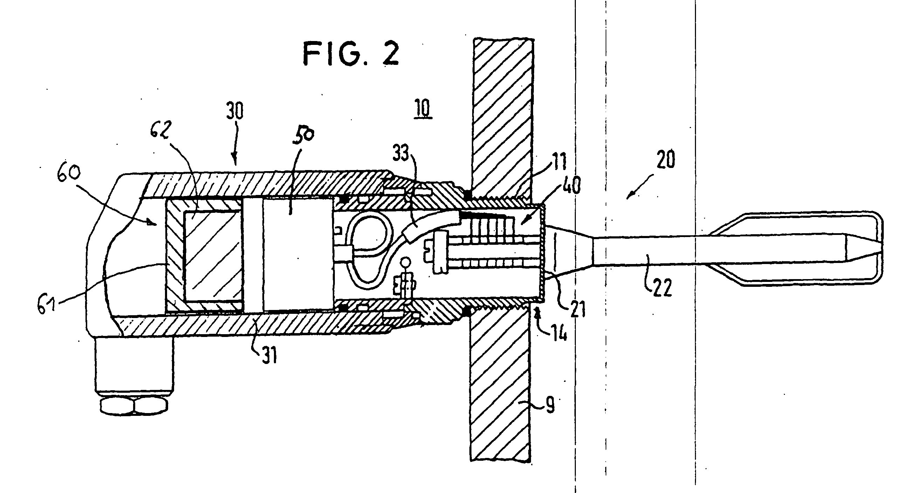

In den Fig. 1 und 2 ist schematisch ein Ausführungsbeispiel für ein Prozeß-Meßgerät 10 in verschiedenen Ansichten schematisch dargestellt.

Bei dem hier gezeigten Prozeß-Meßgerät 10 handelt es sich um einen Füllstands-Grenzschalter, der dazu dient, das Vorhandensein des Prozeß-Mediums oder das Erreichen eines vorgegebenen Pegelstands durch das Prozeß-Medium im Behälter festzustellen und/oder zu überwachen. Dazu ist das Prozeß-Meßgerät 10 mittels einer Schraubverbindung 11 in einer Wandung 9 eines darüber hinaus nicht weiter dargestellten, ein Prozeß-Medium, z.B. eine Flüssigkeit oder ein Pulver, führenden Behälters, z.B. einem Tank oder einer Rohrleitung, fixiert ist. Aufbau und Verwendung derartiger Füllstands-Grenzschalter, insb. deren konstruktiver und schaltungstechnischer Aufbau sowie auch Verfahren zum Betrieb, sind z.B. in der EP-A 984 248, der US-A 45 94 584, der US-A 58 44 491, der US 59 66 983, der US-A 61 38 507, der US-B 62 36 322 ausführlich beschrieben.

Zum Erfassen des Pegelstands und zum Erzeugen eines diesen entsprechend repräsentierenden Meßsignals umfaßt das Prozeß-Meßgerät 10 einen auf dem Niveau des vorgebenen Pegelstand das Medium berührenden physikalisch-elektrischen Meßaufnehmer 20 sowie eine daran via Verbindungsleitung 33 angeschlossene, insb. auch dem Ansteuern des Meßaufnehmers dienende, Meß- und Betriebsschaltung 50.

Als Meßaufnehmer 20 dienenen hier zwei auf einer mediumszugewandten Seite einer Membran 21 fixierte Schwingstäbe 26, 27, die im Betrieb, angetriebenen von einem auf einer mediumsabgewandten Seite der Membran 21 fixierten piezo-elektrischen Wandler 40, zu stimmgabelartigen Schwingungen auf einer mechanischen Resonanzfrequenz angeregt werden und die z.B. bei Erreichen des Pegelstands im Behälter in das Prozeß-Medium eintauchen, wodurch die mechanische Resonanzfrequenz der angeregten Schwingungen verändert wird. Als Meßsignal kann bei derartigen Meßaufnehmern z.B. auch eine den piezo-elektrischen Wandler 40 antreibendes oder eine von diesem erzeugte elektrische Wechselspannung dienen.

Zur Aufnahme der Meß- und Betriebsschaltung 50 und ggf. weiterer im Prozeß-Meßgerät 10 vorgesehenen elektronischen Schaltungskomponenten, wie z.B. eine Ankoppel-Schaltung für einen an das Prozeß-Meßgerät angeschlossenen Feldbus, umfaßt das Prozeß-Meßgerät 10 ein entsprechendes Elektronik-Gehäuse 30 das an einer Verbindungstelle 14 mechanisch, insb. auch starr, mit dem Meßaufnehmer 20, verbunden ist.

Die Verbindungstelle kann beispielsweise dadurch realisiert sein, daß das Elektronik-Gehäuse 30 mit dem Meßaufnehmer 20 verschweißt ist oder daß das Elektronik-Gehäuse auf ein ggf. vorgesehenes halsartiges Übergangsstück des Meßaufnehmers direkt aufgeschraubt ist, vgl hierzu auch die bereits erwähnte EP-A 984 248.

Für den Fall, daß der Meßaufnehmer in einer speziellen Trage oder Haltekonstruktion, beispielsweise einem Meßaufnehmer-Gehäuse oder einem in den Verlauf einer Rohrleitung einsetzbaren Meßaufnehmer-Rohr, untergebracht ist, wie dies z.B. bei Wirbeldurchflußmessern, magnetischinduktiven Durchflußmessern oder Coriolis-Massedurchflußmessern üblich ist, kann die Verbindungstelle beispielsweise auch dadurch realisiert sein, daß das Elektronik-Gehäuse an diese Trage oder Haltekonstruktion angeflanscht ist.

Das Elektronik-Gehäuse 10 ist im Betrieb zumindest zeitweise solchen Vibrationen mit einer Störfrequenz f_{S} ausgesetzt, die im Meßaufnehmer 20 selbst erzeugt oder von mediumsführenden Rohrleitungen oder von Medium vorhaltenden Tanks auf den Meßaufnehmer 10 übertragen werden.

Aufgrund der im wesentlichen starren Ankopplung des Elektronik-Gehäuses 30 an den Meßaufnehmer 20 können diese Vibrationen dabei nahezu ungedämpft vom Meßaufnehmer 20 in das Elektronik-Gehäuse 30 weitergeleitet und dort in entsprechender Weise in Gehäuse-Vibrationen umgesetzt werden. Diese Gehäuse-Vibrationen stellen zum einen eine erhebliche Wechselbelastung von Meßaufnehmer 20 und Elektronik-Gehäuse 30, insb. auch im Bereich der Verbindungsstelle 14 oder der Schraubverbindung 1, dar. Zum anderen können diese Gehäuse-Vibrationen neben den ohnehin unerwünschten mechanischen Mehrbelastungen auch zu einer deutlichen Verschlechterung eines Nutz-zu-Störanteil-Verhältnisses im Meßsignal insb. dann führen, wenn eine Resonanzfrequenz f_{G} des Elektronik-Gehäuses sowohl im Bereich der Störfrequenz f_{S} als auch in einem Frequenz-Übertragungsbereich des Meßaufnehmers 10, insb. des Wandlers 40, liegt.

Wegen der zumeist sehr hohen Güte solcher Elektronik-Gehäuse, üblicherweise liegt sie in einem Bereich zwischen 10 und 100, können die so angeregten Gehäuse-Vibrationen erhebliche Schwingungsamplituden X_{G}, insb. auch hohe maximale Schwingungsamplituden X_{Gmax}, erreichen. Bekanntlich ist die Güte proportional zu einem Kehrwert eines pro Schwingungsperiode im schwingenden System, hier dem Elektronik-Gehäuse 30, auftretenden Energieverlust bezogen auf eine in das schwingenden System eingebrachte Gesamt- oder Anfangs-Energie.

Zum Verringern von Schwingungsamplituden X'_{G} solcher Gehäuse-Vibrationen ist erfindungsgemäß an einer Wandung 31 des Elektronik-Gehäuses 30 wenigstens ein Schwingungsdämpfer 60 fixiert, der dazu dient, in das Elektronik-Gehäuse 30 allfällig eingetragene Schwingungsenergie zu dissipieren, z.B. in Wärmeenrgie umzuwandlen, und somit dem Elektronik-Gehäuse 30 wieder zu entziehen. Dazu ist der Schwingungsdämpfer 60 so ausgeführt und so im Elektronik-Gehäuse 30 angeordnet, daß er, angetrieben von den Gehäuse-Vibrationen, zumindest zeitweise, insb. zu den Gehäuse-Vibrationen außerphasig, schwingen gelassen wird.

Nach einer bevorzugten Ausgestaltung der Erfindung ist der Schwingungsdämpfer 60, wie auch in Fig. 2 schematisch dargestellt, innerhalb des Elektronik-Gehäuses 30 angeordnet. Um eine möglichst hohe Dämpfung der Gehäuse-Vibrationen, also möglichst niedrige Schwingungsamplituden X'_{G}, insb. auch eine niedrige maximale Schwingungsamplitude X'_{Gmax}, zu erzielen, ist der Schwingungsdämpfer 60 dabei vorzugsweise von der zwischen Meßaufnehmer 20 und Elektronik-Gehäuse 30 gebildeten Verbindungstelle 14 möglichst entfernt angeordnet, z.B. im Bereich eines zur Verbindungsstelle distalen Gehäusedeckels.

Als Schwingungsdämpfer 60 kann z.B. ein scheiben- oder becherförmiger Kunststoff-Körper 61 dienen, in den ein, insb. scheiben- oder plattenförmiger, Metall-Körper 62 eingelassen oder eingebettet oder anderweitig an diesem fixiert ist. Die Verwendung eines solchen, beispielsweise aus einem Gummi oder einem vergleichbaren Material bestehenden, Kunststoff-Körpers 61 mit daran fixiertem Metall-Körper 62, z.B. einer Stahlplatte, hat neben dem einfachen und robusten Aufbau auch den Vorteil, daß der Schwingungsdämpfer 60 in einfacher Weise am Elektronik-Gehäuse 30 fixiert werden kann, z.B. durch Ankleben direkt an der_Wandung 31 des_ELektronik Gehäuses_30_oder aber durch Verschrauben mit einem direkt an der Wandung 31 des Elektronik-Gehäuses 30 angeschweißten Stehbolzens. Darüber hinaus kann der Kunststoff-Körper 61 zu dessen Fixierung innerhalb des Elektronik-Gehäuses 30 in in dieses z.B. auch eingeklemmt werden.

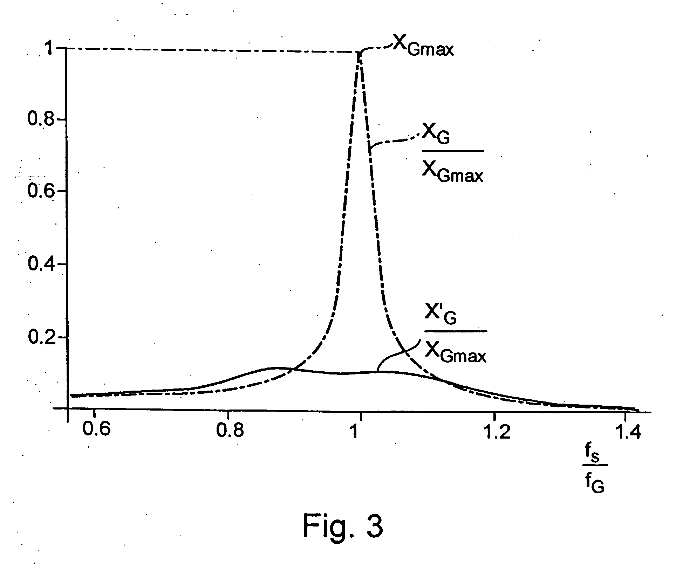

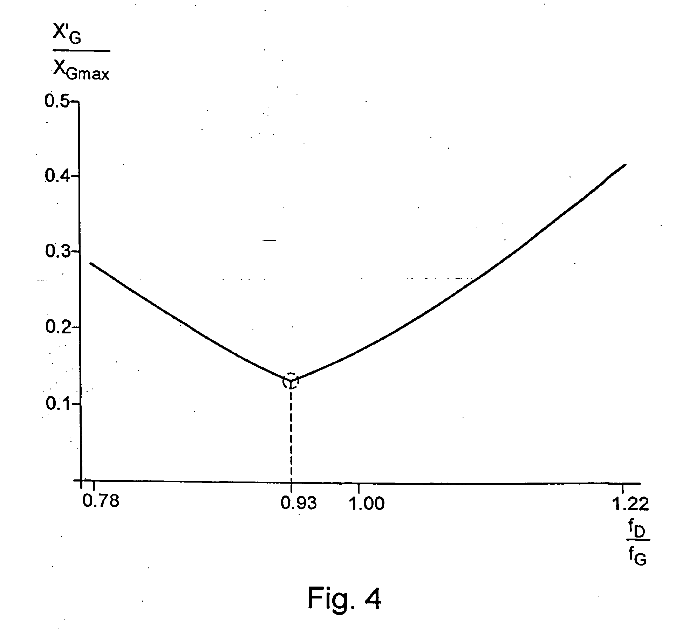

Untersuchungen haben ferner ergeben, daß eine besonders wirkungsvolle Schwingungsdämpfung, insb. auch eine sehr niedrige maximale Schwingungsamplitude, erzielt werden kann, wenn der Schwingungsdämpfer 60 eine Resonanzfrequenz f_{D} aufweist, die höchstens um etwa 10% von einer Resonanzfrequenz f_{G} des Elektronik-Gehäuses 30 abweicht, insb. dann, wenn diese Resonanzfrequenz f_{D} des Schwingungsdämpfers 60 kleiner ist als die zu bedämpfende Resonanzfrequenz f_{G} des Elektronik-Gehäuses 30, vgl. hierzu auch Fig. 3 und Fig. 4; die in Fig. 3 strich-punktiert gezeichnet Kurve zeigt einen gemessenen und auf eine maximale Schwingungsamplitude X_{Gmax} normierten Amplitudenverlauf X_{G} (fₛ/f_{G}) eines ungedämpft schwingenden, also keinen Schwingungsdämpfer aufweisenden Elektronik-Gehäuses, während die durchgezogenen Kurve einen gemessenen und auf die selbe maximale Schwingungsamplitude X_{Gmax} normierten Amplitudenverlauf X'_{G} (fₛ/f_{G}) des selben Elektronik-Gehäuses jedoch mit Schwingungsdämpfer zeigt.

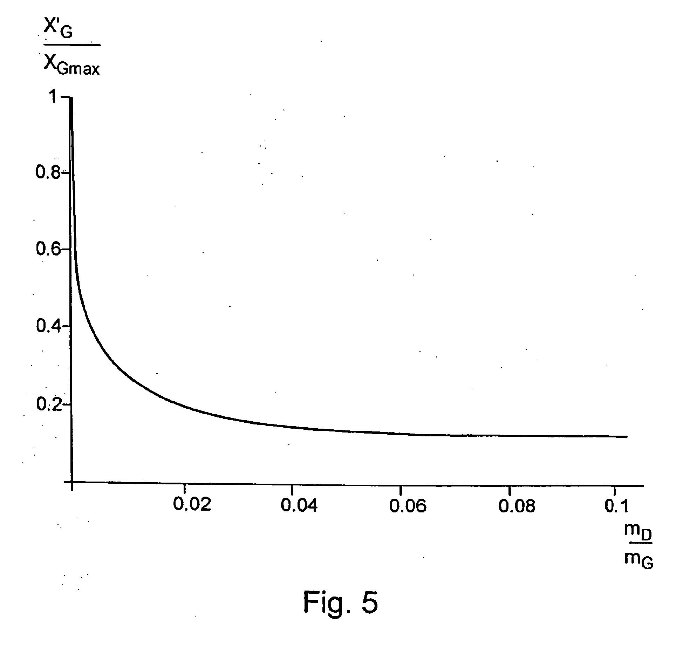

Ferner ist von den Erfindern erkannt worden, daß die für die Resonanzfrequenz f_{D} des Schwingungsdämpfers wirksame Masse m_{D} etwa 1% einer Masse m_{G} des Elektronik-Gehäuses nicht unterschreiten sollte. Besonders gute Ergebnisse können dabei mit solchen Schwingungsdämpfern erzielt werden, deren wirksame Masse m_{D} über 5% der Masse m_{G} des Elektronik-Gehäuses gewählt worden ist, vgl. hierzu Fig. 5.

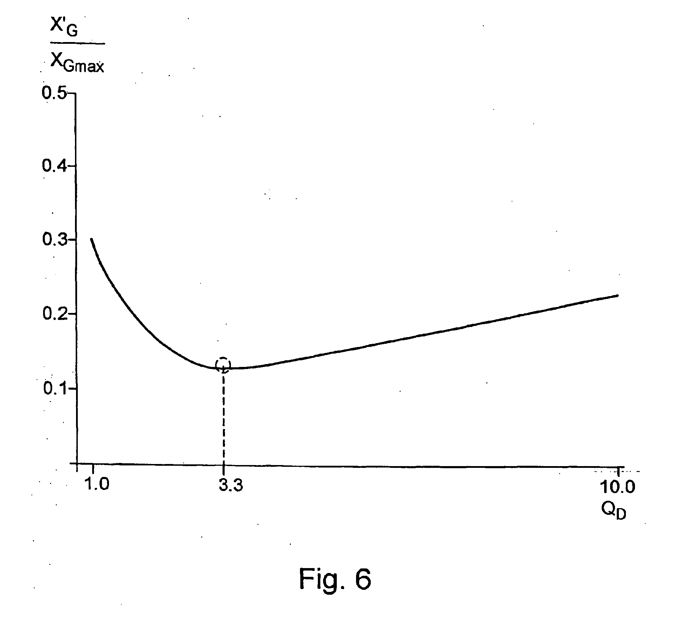

Nach einer weiteren bevorzugten Ausgestaltung der Erfindung weist der Schwingungsdämpfer eine Güte Q_{D} auf, die im Vergleich zu einer Güte Q_{G} des vibrierenden Elektronik-Gehäuses niedriger ist. Darüber hinaus konnte überraschenderweise festgestellt werden, daß sich insb. dann eine äußert wirkungsvolle Dämpfung der Gehäuse-Vibrationen erzielen läßt, wenn der schwingengelassene Schwingungsdämpfer eine Güte-Q_{D} aufweist, die innerhalb eines Bereichs von 1 bis 5, vorzugsweise in etwa zwischen 3 und 3,5 liegt, vgl. Fig. 6.

Durch die Verwendung eines Schwingungsdämpfers der beschriebenen Art können, wie in Fig. 4 dargestellt, allfällige Gehäuse-Vibrationen und damit auch entsprechende Ströranteile, insb. auch über eine große Bandbreite, soweit im Meßsignal reduziert werden, daß das Nutz-zu-Störanteil-Verhältnis im Meßsignal im Vergleich zu Meßgeräten mit ungedämpft vibrierendem Elektronik-Gehäuse deutlich verbessert werden.

Ein weiterer Vorteil des erfindungsgmäßen Elektronik-Gehäuses besteht auch darin, daß es neben dem hier beispeilhaft gezeigten Füllstands-Grenzschalter praktisch für jede Art von Prozeß-Meßgeräten, also unabhängig von der zu messenden Prozeß-Meßgröße und unabhängig vom jeweils verwirklichten Meßprinzip, insb. aber auch für Druckmesser, magnetisch-induktive Durchflußmesser, Wirbeldurchflußmesser, Coriolis-Massedurchflußmesser, Dichtemesser oder Viskositätmesser oder auch für Ultraschall-Durchfluß- oder Ultraschall- Füllstandsmesser etc., verwendet werden kann.

## Patentansprüche

1. Prozeß-Meßgerät (10), insb. Feldmeßgerät, das umfaßt:
- einen in eine Wandung (9) eines ein Prozeß-Medium führenden Behälters, inbs. einer Rohrleitung oder einem Tank, einsetzbaren Meßaufnehmer (20) sowie
- ein mit dem Meßaufnehmer (20) mechanisch, insb. starr, gekoppelten Elektronik-Gehäuse (30) für eine Meßgerät-Elektronik (50),
- wobei das Elektronik-Gehäuse (30) im Meßaufnehmer (10) erzeugten oder via Meßaufnehmer (10) übertragenen Vibrationen zumindest zeitweise aufgesetzt ist, **dadurch gekennzeichnet, dass** zum Verringern von Schwingungsamplituden allfälliger Vibrationen des Elektronik-Gehäuses (30) an einer Wandung (31) von diesem wenigstens ein Schwingungsdämpfer (60) fixiert ist, der zum Dissipieren von in das Elektronik-Gehäuse (30) eingetragener Schwingungsenergie zumindest zeitweise schwingen gelassen wird.

2. Prozeß-Meßgerät nach Anspruch 1, wobei der Schwingungsdämpfer (60) von einer Verbindungstelle (14) zwischen Meßaufnehmer (20) und Elektronik-Gehäuse (30) entfernt angeordnet ist.

3. Prozeß-Meßgerät nach einem der vorherigen Ansprüche, bei dem der schwingengelassene Schwingungsdämpfer (60) eine Güte, Q_{D}, aufweist, die im Vergleich zu einer Güte, Q_{G}, des vibrierenden Elektronik-Gehäuses (30) niedriger ist.

4. Prozeß-Meßgerät nach einem der vorherigen Ansprüche, bei dem der schwingengelassene Schwingungsdämpfer (60) eine Güte, Q_{D}, aufweist, die im Bereich von 1 bis 5, insb. bei etwa 3, liegt.

5. Prozeß-Meßgerät nach einem der vorherigen Ansprüche, bei dem der Schwingungsdämpfer (60) eine Resonanzfrequenz, f_{D}, aufweist, die höchstens um etwa 10% von einer Resonanzfrequenz, f_{G}, des Elektronik-Gehäuses (30) abweicht.

6. Prozeß-Meßgerät nach einem der vorherigen Ansprüche, bei dem Schwingungsdämpfer (60) eine Resonanzfrequenz, f_{D}, aufweist, die kleiner ist als eine Resonanzfrequenz, f_{G}, des Elektronik-Gehäuses (30).

7. Prozeß-Meßgerät nach einem der vorherigen Ansprüche, bei dem der Schwingungsdämpfer (60) eine Masse, m_{D}, aufweist, die größer als 1% einer Masse, m_{G}, des Elektronik-Gehäuses (30) ist.

8. Prozeß-Meßgerät nach einem der vorherigen Ansprüche, bei dem der Schwingungsdämpfer (60) innerhalb des Elektronik-Gehäuses (30) angeordnet ist.

9. Prozeß-Meßgerät nach einem der vorherigen Ansprüche, bei dem der Schwingungsdämpfer (60) einen scheiben- oder becherförmigen Kunststoff-Körper (61) umfaßt, in den ein, insb. scheiben- oder plattenförmiger Metall-Körper (62) eingelassen oder eingebettet ist.

10. Prozeß-Meßgerät nach einem der vorherigen Ansprüche, bei dem der Schwingungsdämpfer (60) einen Kunststoff-Körper (61) umfaßt, der an der Wandung (31) des Elektronik-Gehäuses (30) fixiert, insb. angeklebt, ist.

## Claims

1. Process measuring device (10), particularly a field device, comprising:
- a sensor (20), which can be inserted into a wall (9) of a container that holds a process medium, said container being a pipe or a tank, and
- an electronic housing (30) for measuring device electronics (50) which is mechanically connected to the sensor (20), particularly in a rigid manner,
- wherein the electronic housing (30) is at least partially exposed to vibrations generated in the sensor (10) or transmitted via the sensor (10), **characterized in that** - in order to reduce the oscillation amplitude of any vibrations of the electronic housing (30) - at least one oscillation damper (60) is fixed on a wall (31) of the housing and allowed to oscillate at least temporarily in order to dissipate oscillation energy introduced into the electronic housing (30).

2. Process measuring device as claimed in Claim 1, wherein the oscillation damper (60) is arranged at a distance from a junction point (14) between the sensor (20) and electronic housing (30).

3. Process measuring device as claimed in one of the previous claims, wherein the oscillation damper (60) which is allowed to oscillate has a quality Q_{D}, which is lower compared to a quality Q_{G} of the vibrating electronic housing (30).

4. Process measuring device as claimed in one of the previous claims, wherein the oscillation damper (60) which is allowed to oscillate has a quality Q_{D}, which is in the range between 1 and 5, particularly around 3.

5. Process measuring device as claimed in one of the previous claims, wherein the oscillation damper (60) has a resonance frequency f_{D}, which deviates by a maximum of around 10% from a resonance frequency f_{G} of the electronic housing (30).

6. Process measuring device as claimed in one of the previous claims, wherein the oscillation damper (60) has a resonance frequency f_{D}, which is smaller than a resonance frequency f_{G} of the electronic housing (30).

7. Process measuring device as claimed in one of the previous claims, wherein the oscillation damper (60) has a mass m_{D}, which is greater than 1 % of a mass m_{G} of the electronic housing (30).

8. Process measuring device as claimed in one of the previous claims, wherein the oscillation damper (60) is arranged inside the electronic housing (30).

9. Process measuring device as claimed in one of the previous claims, wherein the oscillation damper (60) comprises a discoid or cup-shaped plastic body (61) into which a metal body (62) is inserted or embedded, particularly a discoid or plate-shaped metal body (62).

10. Process measuring device as claimed in one of the previous claims, wherein the oscillation damper (60) comprises a plastic body (61), which is fixed to, and in particular stuck to, the wall (31) of the electronic housing (30).

## Revendications

1. Appareil de mesure de process (10), notamment un appareil de mesure de terrain, comprenant :
- un transmetteur de mesure (20) insérable dans une paroi d'un récipient acheminant un produit de process, notamment une conduite ou un réservoir, ainsi que
- un boîtier électronique (30) couplé mécaniquement avec le transmetteur de mesure (20), notamment de façon rigide, dans lequel est logé l'électronique de l'appareil de mesure (50),
- le boîtier électronique (30) étant exposé au moins temporairement aux vibrations générées dans le transmetteur de mesure (10) ou transmises via le transmetteur de mesure (10), **caractérisé en ce que**, en vue de la réduction des amplitudes d'oscillations d'éventuelles vibrations du boîtier électronique (30), au moins un amortisseur d'oscillations (60) est fixé sur une paroi (31) du boîtier, lequel amortisseur est fait entré au moins temporairement en oscillation en vue de la dissipation de l'énergie d'oscillation introduite dans le boîtier électronique (30).

2. Appareil de mesure de process selon la revendication 1, pour lequel l'amortisseur d'oscillations (60) est disposé à distance d'un point de jonction (14) entre le transmetteur de mesure (20) et le boîtier électronique (30).

3. Appareil de mesure de process selon l'une des revendications précédentes, pour lequel l'amortisseur d'oscillations (60) fait entré en oscillation présente une qualité Q_{D}, qui est inférieure par rapport à une qualité Q_{G} du boîtier électronique (30) vibrant.

4. Appareil de mesure de process selon l'une des revendications précédentes, pour lequel l'amortisseur d'oscillations (60) fait entré en oscillation présente une qualité Q_{D}, qui se situe dans la plage de 1 à 5, notamment à environ 3.

5. Appareil de mesure de process selon l'une des revendications précédentes, pour lequel l'amortisseur d'oscillations (60) présente une fréquence de résonance f_{D}, qui diverge au maximum d'environ 10 % d'une fréquence de résonance f_{G} du boîtier électronique (30).

6. Appareil de mesure de process selon l'une des revendications précédentes, pour lequel l'amortisseur d'oscillations (60) présente une fréquence de résonance f_{D}, qui est inférieure à une fréquence de résonance f_{G} du boîtier électronique (30).

7. Appareil de mesure de process selon l'une des revendications précédentes, pour lequel l'amortisseur d'oscillations (60) présente une masse m_{D}, qui est supérieure à 1 % d'une masse m_{G} du boîtier électronique (30).

8. Appareil de mesure de process selon l'une des revendications précédentes, pour lequel l'amortisseur d'oscillations (60) est disposé à l'intérieur du boîtier électronique (30).

9. Appareil de mesure de process selon l'une des revendications précédentes, pour lequel l'amortisseur d'oscillations (60) comprend un corps en matière plastique (61) en forme de disque ou de godet, dans lequel est encastré ou enrobé un corps métallique (62) notamment en forme de disque ou de plaque.

10. Appareil de mesure de process selon l'une des revendications précédentes, pour lequel l'amortisseur d'oscillations (60) comprend un corps en matière plastique (61), qui est fixé, notamment collé, sur la paroi du boîtier électronique (30).
